# EUROPEAN PATENT APPLICATION

(11) **EP 4 486 007 A1**
(43) Date of publication of application: **01.01.2025**
(21) Application number: 24184072.7
(22) Date of filing: 24.06.2024
(51) Int. Cl.: H04W 36/08, H04W 84/12

(54) **ELECTRONIC APPARATUS, METHOD FOR CONTROLLING ELECTRONIC APPARATUS, METHOD FOR CONTROLLING PRINT CONTROL APPARATUS, AND STORAGE MEDIUM**

(30) Priority: 30.06.2023 JP 2023107824
(71) Applicant: CANON KABUSHIKI KAISHA, Tokyo 146-8501 (JP)
(72) Inventor: WATANABE, Tokiko, Tokyo, 146-8501 (JP)
(74) Representative: Canon Europe Limited

(57) **Abstract**

An electronic apparatus (100) includes acceptance means (220) configured to accept a user operation for setting a connection destination access point (AP) to connect to; receiving means (226) configured to receive a change request from a currently connected AP to change the connection destination AP from the currently connected AP to an another AP; control means (212) configured to perform control to wirelessly connect to a first AP, the first AP being set in accordance with an operation accepted by the acceptance means; and print control means (224). In a case where the receiving means receives the change request after a wireless connection is made to the first AP set in accordance with the operation accepted by the acceptance means, changing the connection destination AP from the first AP based on the change request is not performed.

## Description

### TECHNICAL FIELD

The present invention relates to an electronic apparatus capable of changing a connection destination access point (AP) to connect to in accordance with a connection destination change request from the AP, a method for controlling the electronic apparatus, a method for controlling the print control apparatus, and a storage medium.

### BACKGROUND OF THE INVENTION

### Description of the Related Art

A technique for an extended service set (ESS) including a plurality of APs involves dynamically switching a connection destination AP to which a station (STA) is to connect in the ESS to efficiently exchange data between the AP and the STA. When it is determined that the AP as the connection destination is to be switched on the basis of, for example, the congestion of the AP to which the STA is currently connected, the occupancy of the other APs, or radio wave conditions, the currently connected AP transmits an AP change request to the STA. Upon receiving the AP change request, the STA switches the connection destination AP in accordance with the request to connect to an appropriate AP.

Japanese Patent Laid-Open No. 2021-175068 discloses the following process for transmitting a request from a router having an AP function to a currently connected wireless slave unit to change a connection destination. A mobile router (MR1) connectable to a plurality of wireless slave units checks whether a wireless slave terminal supports Institute of Electrical and Electronics Engineers (IEEE) 802. 11v. Whether the wireless slave terminal supports IEEE 802.11v can be determined from an Association Request frame transmitted from the wireless slave terminal to wirelessly connect to the MR1. If the wireless slave terminal supports IEEE 802.1 1v, a basic service set (BSS) transition management (BTM) Request frame is transmitted to the wireless slave terminal. In the BTM Request frame, a BSS Transition Candidate List Entries field specifies a basic service set identifier (BSSID) of a master router RT2 as the connection destination. Accordingly, switching of the connection destination of the slave terminal is prompted. In accordance with the received BTM Request frame, the wireless slave terminal switches the connection destination from the MR1 to the master router RT2.

A function of using a media access control (MAC) address (BSSID) to uniquely set an AP to be connected is available. When this function provides setting such that an AP to be connected is uniquely designated by the BSSID, the connection destination is changed to another AP in accordance with a connection destination change request from the AP, resulting in a connection being made to an AP different from the AP having the BSSID set as the AP to be connected. This situation is unnatural for the user and may confuse the user.

### SUMMARY OF THE INVENTION

The present invention provides a mechanism for setting an AP to be connected and changing a connection destination in accordance with a connection destination change request from the AP without confusing a user.

The present invention in its first aspect provides an electronic apparatus as specified in claims 1 to 10.

The present invention in its second aspect provides a method for controlling a print control apparatus as specified in claim 11.

The present invention in its third aspect provides a computer-readable storage medium as specified in claim 12.

Further features of the present invention will become apparent from the following description of embodiments with reference to the attached drawings.

### BRIEF DESCRIPTION OF THE DRAWINGS

Fig. 1 is a diagram illustrating an example configuration of a system.
Figs. 2A and 2B are diagrams illustrating an example configuration of a multifunction peripheral (MFP).
Figs. 3A, 3B, and 3C are illustrations of example screens displayed on an operation display unit of the MFP.
Figs. 4A and 4B are diagrams illustrating a configuration of a mobile terminal device.
Fig. 5 is a configuration diagram of an access point (AP).
Fig. 6 is a sequence diagram illustrating a process performed in response to a connection destination change request from the AP.
Figs. 7A, 7B, 7C, 7D, 7E, and 7F are illustrations of various example screens displayed on a display of the MFP.
Figs. 8A, 8B, and 8C are a flowchart of a process performed by the MFP, including processing of suppressing a connection destination change function in conjunction with designation of the basic service set identifier (BSSID) of a connection destination AP.

### DESCRIPTION OF THE EMBODIMENTS

An embodiment of the present invention will be described in detail hereinafter with reference to the drawings. It should be noted that the present embodiment is merely an example and specific examples of components, processing steps, display screens, and so on are not intended to limit the scope of the present invention unless otherwise specified.

### System Configuration

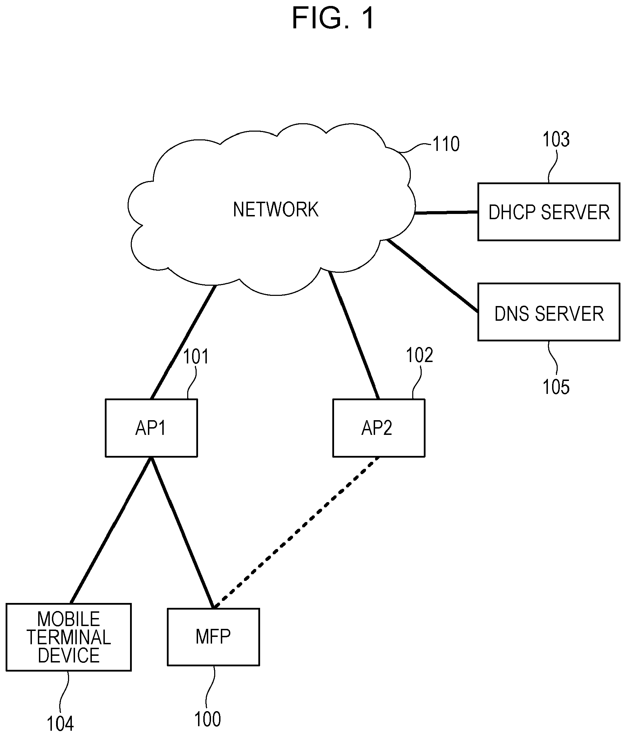

Fig. 1 illustrates an example configuration of a system according to the present embodiment. In one example, the system is a wireless communication system in which a plurality of communication devices can wirelessly communicate with each other. In the example illustrated in Fig. 1, the communication devices include a mobile terminal device 104, an MFP 100, access points AP1 (101) and AP2 (102), a dynamic host configuration protocol (DHCP) server 103, a domain name system (DNS) server 105, and a network 110. The mobile terminal device 104 is a device having a wireless communication function using a wireless local area network (LAN) or the like. The wireless LAN may be hereinafter referred to as a WLAN. The mobile terminal device 104 may be, for example, a personal information terminal such as a personal digital assistant (PDA), a mobile phone (smartphone), a digital camera, or a personal computer (PC).

The MFP 100 is a printer having a printing function. The MFP 100 may also have a reading function (scanner), a facsimile transmission (fax) function, and a telephone function. In the present embodiment, the MFP 100 also has a communication function for wirelessly communicating with the mobile terminal device 104. The present embodiment describes the MFP 100, by way of example but not limitation. Instead of the MFP 100, any other device having a communication function, such as a scanner device, a projector, a mobile terminal, a smartphone, a laptop PC, a tablet terminal, a PDA, a digital camera, a music playing device, a television, or a smart speaker, may be used. MFP is an acronym for Multi Function Peripheral.

The access point AP1 (101) is disposed separately from (or outside) the mobile terminal device 104 and the MFP 100, and operates as a WLAN base station device. A communication device having a WLAN communication function can perform communication in infrastructure mode for WLANs via the access point AP1 (101). In the following description, the access points may be referred to as "APs". The infrastructure mode for WLANs may be referred to as "wireless infrastructure mode". The access point AP1 (101) performs wireless communication with a communication device (authenticated communication device) allowed to connect to the access point AP1 (101), and relays wireless communication between the communication device and another communication device. The access point AP1 (101) may be connected to, for example, a wired communication network and may relay communication between a communication device connected to the wired communication network and another communication device wirelessly connected to the access point AP1 (101).

The access point AP2 (102) has a function equivalent to that of the access point AP1 (101). The MFP 100 switches the connection from the access point AP1 (101) to the access point AP2 (102), if necessary. The DHCP server 103 is connected to the MFP 100 via the access point AP1 (101) and the network 110, and responds to a request from the MFP 100 to provide a service to the MFP 100. In Fig. 1, the DHCP server 103 is connected as a device different from the access points AP1 (101) and AP2 (102). However, the access points AP1 (101) and AP2 (102) may have a DHCP server function. The DNS server 105 is connected to the MFP 100 and the mobile terminal device 104 via the access point AP1 (101) and the network 110, and responds to a request from the MFP 100 or the mobile terminal device 104 to provide a service for name resolution. The network 110 may be the Internet, a closed network within a company, or a mobile telephone network.

### Appearance of MFP

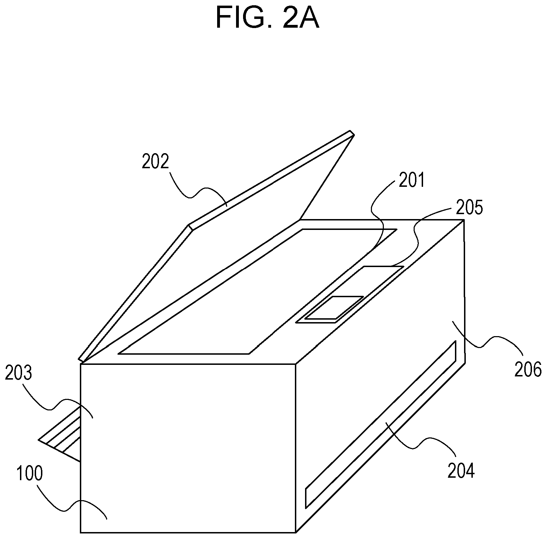

Fig. 2A illustrates an example appearance of the MFP 100. The MFP 100 includes, for example, a document table 201, a document cover 202, a print sheet insertion port 203, a print sheet discharge port 204, and an operation display unit 205. The document table 201 is a table on which a document to be read is placed. The document cover 202 is a cover to be closed to press a document placed on the document table 201 and prevent external leakage of light from a light source with which the document is irradiated during reading of the document. The print sheet insertion port 203 is an insertion port in which sheets of various sizes can be set. The print sheet discharge port 204 is a discharge port through which a printed sheet is discharged. The sheets set in the print sheet insertion port 203 are conveyed one by one to a printing unit 222 (described below), printed by the printing unit 222, and then discharged through the print sheet discharge port 204. The operation display unit 205 includes keys such as a character input key, a cursor key, an enter key, and a cancel key, a light-emitting diode (LED), a liquid crystal display (LCD), and so on. The operation display unit 205 is configured to accept operations performed by a user, such as the activation of various MFP functions and the setting of various settings. The operation display unit 205 may further include a touch panel display. The MFP 100 has a wireless communication function using a WLAN, and includes a wireless communication antenna 206 for wireless communication. The wireless communication antenna 206 may be invisible from the outside. Like the mobile terminal device 104, the MFP 100 can also perform wireless communication using a WLAN in a frequency band such as the 2.4 GHz or 5 GHz band.

### Configuration of MFP

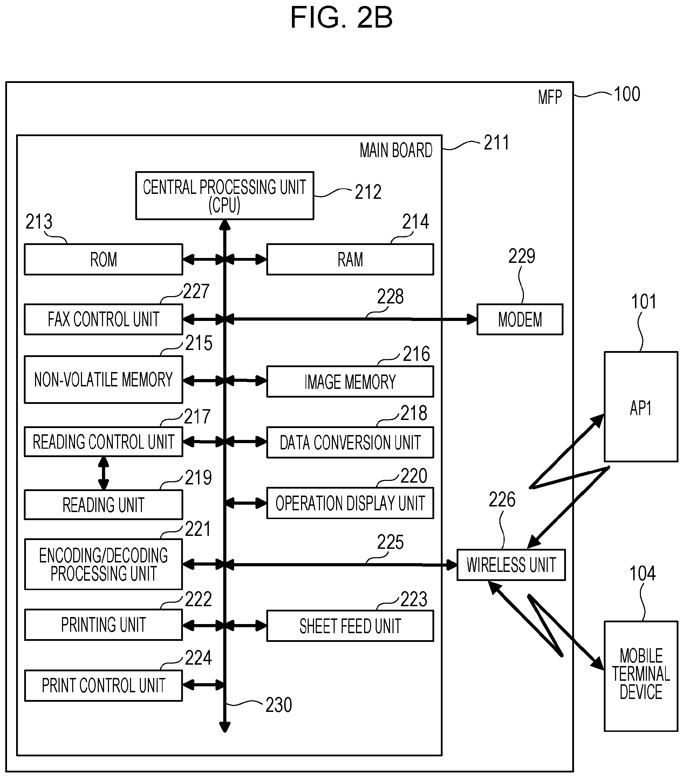

Fig. 2B illustrates an example configuration of the MFP 100. The MFP 100 includes a main board 211 for performing main control of the MFP 100, and a wireless unit 226. The wireless unit 226 is one communication module for performing WLAN communication by using at least one common antenna. The MFP 100 further includes a modem 229 for performing wired communication, for example. The main board 211 includes, for example, a central processing unit (CPU) 212, a read-only memory (ROM) 213, a random access memory (RAM) 214, a non-volatile memory 215, an image memory 216, a reading control unit 217, a data conversion unit 218, a reading unit 219, and an encoding/decoding processing unit 221. The main board 211 further includes, for example, the printing unit 222, a sheet feed unit 223, a print control unit 224, an operation display unit 220, and a fax control unit 227.

The functional units in the main board 211 described above are connected to each other via a system bus 230 managed by the CPU 212. The main board 211 and the wireless unit 226 are connected via, for example, a dedicated bus 225. The main board 211 and the modem 229 are connected via, for example, a bus 228.

The CPU 212 is a system control unit including at least one processor, and controls the overall operation of the MFP 100. In one example, the processes of the MFP 100, which will be described below, are implemented by the CPU 212 executing a program stored in the ROM 213. Hardware dedicated for each of the processes may be provided. The ROM 213 stores a control program executed by the CPU 212, an embedded operating system (OS) program, and so on. In the present embodiment, the CPU 212 executes each control program stored in the ROM 213 under the management of the embedded OS stored in the ROM 213 to control software such as for scheduling and for switching tasks.

The RAM 214 includes a static random access memory (SRAM), for example. The RAM 214 stores data such as data of program control variables, setting values registered by the user, and data for managing the MFP 100. The RAM 214 may also be used as a buffer for various works. The non-volatile memory 215 includes a memory such as a flash memory, for example, and stores data continuously even after the power to the MFP 100 is turned off. The image memory 216 includes a memory such as a dynamic random access memory (DRAM). The image memory 216 stores image data received via the wireless unit 226, image data processed by the encoding/decoding processing unit 221, and so on. The memory configuration of the MFP 100 is not limited to the configuration described above. The data conversion unit 218 performs processing such as analysis of data in various formats and conversion from image data to print data.

The reading control unit 217 controls the reading unit 219 (e.g., a contact image sensor (CIS)) to optically read a document placed on the document table 201. The reading control unit 217 converts an image obtained by optically reading the document into electrical image data (image signal) and outputs the electrical image data. At this time, the reading control unit 217 may perform various kinds of image processing such as binarization and halftoning before outputting the image data.

The operation display unit 220 corresponds to the operation display unit 205 described with reference to Fig. 2A, and executes processing such as displaying on the display under display control by the CPU 212 and generating a signal in response to acceptance of a user operation.

The encoding/decoding processing unit 221 performs encoding processing, decoding processing, and enlargement/reduction processing of image data (such as Joint Photographic Experts Group (JPEG) data or Portable Network Graphics (PNG) data) handled by the MFP 100.

The sheet feed unit 223 holds sheets for printing. The sheet feed unit 223 can feed a set sheet under the control of the print control unit 224. The sheet feed unit 223 may include a plurality of sheet feed units to hold a plurality of types of sheets in a single device, and control can be performed to determine from which of the sheet feed units to feed a sheet under the control of the print control unit 224.

The print control unit 224 performs various kinds of image processing such as smoothing processing, print density correction processing, and color correction on image data to be printed, and outputs the processed image data to the printing unit 222. The printing unit 222 is configured to execute, for example, an inkjet printing process. The printing unit 222 ejects ink supplied from an ink tank through a print head and records an image on a recording medium such as a sheet of paper. The printing unit 222 may be configured to execute another printing process such as an electrophotographic printing process. Further, the print control unit 224 may periodically read information on the printing unit 222 and update, for example, status information stored in the RAM 214. The status information includes, for example, the remaining amount of the ink tank, and the state of the print head.

The wireless unit 226 is a unit capable of providing a WLAN communication function. For example, the wireless unit 226 can provide a function similar to that of a combination with a WLAN unit 401 of the mobile terminal device 104. That is, in accordance with the WLAN standard, the wireless unit 226 converts data into packets and transmits the packets to another device, or restores packets from another external device into original data and outputs the original data to the CPU 212. The wireless unit 226 can perform communication as a station conforming to the series of IEEE 802.11 standards. In particular, the wireless unit 226 can perform communication as an IEEE 802.11a/b/g/n/ac/ax station. In the following description, a station may be referred to as an STA. In addition, the wireless unit 226 can perform communication as a Wi-Fi Agile Multiband (trademark) STA.

The wireless unit 226 supports IEEE 802.11ax, or Wi-Fi 6 (trademark), and can perform processes compliant with IEEE 802.11ax. That is, the MFP 100 can perform one or both of processing of an STA supporting (or compatible with) OFDMA and an operation (processing) of an STA supporting (or compatible with) TWT. OFDMA is short for Orthogonal Frequency Division Multiple Access. TWT is short for Target Wake Time. Since the wireless unit 226 supports TWT, the timing of data communication from the master device to the STA is adjusted. The wireless unit 226 (i.e., the MFP 100) serving as an STA puts the communication function into sleep state when there is no need to wait for signal reception. This configuration can reduce power consumption. The wireless unit 226 also supports Wi-Fi 6E (trademark). That is, the wireless unit 226 can also perform communication over the 6 GHz band (5.925 GHz to 7.125 GHz). The 6 GHz band does not include a target band in which dynamic frequency selection (DFS) is implemented, which is included in the 5 GHz band. In the communication over the 6 GHz band, accordingly, communication disconnection caused by the DFS waiting time does not occur. As a result, it can be expected to perform more comfortable communication.

The mobile terminal device 104 and the MFP 100 can perform peer-to-peer (P2P) (WLAN) communication based on Wi-Fi Direct (WFD), and the wireless unit 226 has a software access point (Soft-AP) function or a group owner function. That is, the wireless unit 226 can establish a P2P communication network and determine a channel to be used for P2P communication.

### Operation Display Unit of MFP

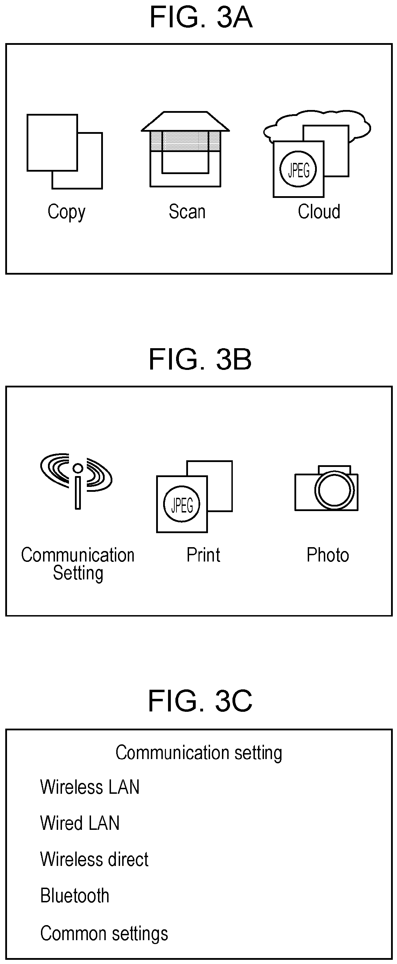

Figs. 3A to 3C schematically illustrate example screens displayed on the display (touch panel display) included in the operation display unit 220 of the MFP 100. Fig. 3A illustrates an example of a home screen displayed when operation such as printing or scanning does not take place after power to the MFP 100 is turned on (when the MFP 100 is in idle state or standby state). In Fig. 3A, display items (menu items) marked "Copy", "Scan", and "Cloud" are displayed. The item "cloud" is a menu item related to a cloud function using Internet communication. When one of the menu items is selected by a key operation or a touch panel operation, the MFP 100 can start implementing a corresponding setting or function. The MFP 100 accepts a key operation or a touch panel operation on the home screen illustrated in Fig. 3A to seamlessly display a screen different from that illustrated in Fig. 3A.

Fig. 3B illustrates a display example of another portion of the home screen. In response to an operation of displaying another page of the home screen (such as sliding from left to right or vice versa), a transition occurs from the state illustrated in Fig. 3A to a screen illustrated in Fig. 3B. In Fig. 3B, display items (menu items) marked "Communication setting", "Print", and "Photo" are displayed. When one of these menu items is selected, a function corresponding to the selected menu item, that is, one of a print function, a photo function, and communication setting, is implemented.

Fig. 3C illustrates a display example of a menu screen for communication setting, which is displayed when the communication setting is selected on the screen illustrated in Fig. 3B. The menu screen for communication setting displays menu items (options) "Wireless LAN", "Wired LAN", "Wireless direct", "Bluetooth", and "Common settings". The items "Wireless LAN", "Wired LAN", and "Wireless direct" are menu items for performing LAN setting, and one of these items is used to perform setting such as setting a wired connection, enabling or disabling the wireless infrastructure mode, or enabling or disabling the P2P mode such as WFD or Soft-AP mode. When the item "Wireless LAN" is selected and the wireless LAN is set to be enabled by a user operation, the wireless infrastructure mode is enabled. When the item "Wireless direct" is selected and wireless direct is set to be enabled by a user operation, the P2P (WLAN) mode is enabled. This screen also displays a "Common settings" menu related to each connection mode. On this screen, the user can further set the frequency band and the frequency channel for the wireless LAN.

### Appearance of Mobile Terminal Device

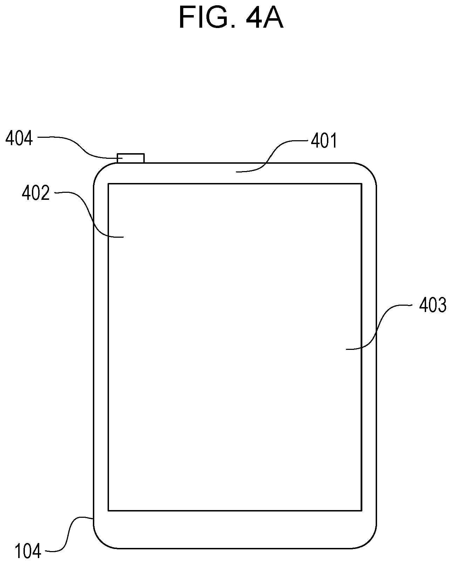

Fig. 4A is a diagram illustrating an example appearance of the mobile terminal device 104. In the present embodiment, as an example, the mobile terminal device 104 is a typical smartphone. The mobile terminal device 104 includes, for example, a display unit 402, an operation unit 403, and a power key 404. The display unit 402 is, for example, a display including an LCD display mechanism. The display unit 402 may display information by using, for example, an LED. The mobile terminal device 104 may have a function of outputting information by voice in addition to or instead of the display unit 402. The operation unit 403 includes hard keys such as keys and buttons, a touch panel, and so on to detect a user operation.

In the illustrated example, a common touch panel display is used to display information on the display unit 402 and accept a user operation by the operation unit 403. Thus, the display unit 402 and the operation unit 403 are implemented by a single device. In this case, for example, a button icon or a software keyboard is displayed using a display function of the display unit 402, and a touch by the user on the button icon or the software keyboard is detected by an operation accepting function of the operation unit 403. The display unit 402 and the operation unit 403 may be separate from each other, and hardware for display and hardware for operation acceptance may be separately provided. The power key 404 is a hard key for accepting a user operation for turning on or off the power to the mobile terminal device 104.

The mobile terminal device 104 includes a WLAN unit 401 that provides a WLAN communication function. The WLAN unit 401 may be invisible from the outside. The WLAN unit 401 is configured to execute data (packet) communication in a WLAN system conforming to, for example, the series of IEEE 802.11 standards (such as IEEE 802.11a/b/g/n/ac/ax).

In addition, the WLAN unit 401 can perform communication as a Wi-Fi Agile Multiband (trademark) AP. However, the present invention is not limited to this configuration, and the WLAN unit 401 may be configured to execute communication in a WLAN system conforming to any other standard. In the illustrated example, it is assumed that the WLAN unit 401 can perform communication over both the 2.4 GHz and 5 GHz bands. It is also assumed that the WLAN unit 401 can execute communication based on WFD, communication in the Soft-AP mode, communication in the wireless infrastructure mode, and so on. Operations in these modes will be described below.

### Configuration of Mobile Terminal Device

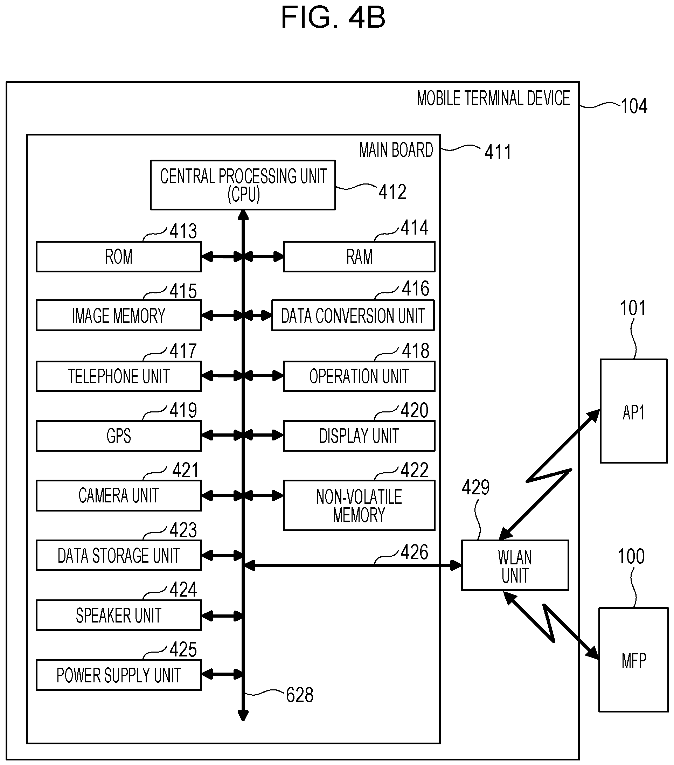

Fig. 4B illustrates an example configuration of the mobile terminal device 104. In one example, the mobile terminal device 104 includes a main board 411 for performing main control of the mobile terminal device 104, and a WLAN unit 429 that performs WLAN communication. The main board 411 includes, for example, a CPU 412, a ROM 413, a RAM 414, an image memory 415, a data conversion unit 416, a telephone unit 417, a GPS 419, a camera unit 421, a non-volatile memory 422, a data storage unit 423, a speaker unit 424, and a power supply unit 425. CPU is an acronym for Central Processing Unit, ROM is an acronym for Read Only Memory, RAM is an acronym for Random Access Memory, and GPS is an acronym for Global Positioning System. The mobile terminal device 104 further includes a display unit 420 and an operation unit 418. The functional units in the main board 411 described above are connected to each other via a system bus 628 managed by the CPU 412. The main board 411 and the WLAN unit 429 (the WLAN unit 401 described above) are connected to each other via, for example, a dedicated bus 426.

The CPU 412 is a system control unit including at least one processor, and controls the overall operation of the mobile terminal device 104. In one example, the processes of the mobile terminal device 104, which will be described below, are implemented by the CPU 412 executing a program stored in the ROM 413. Hardware dedicated for each of the processes may be provided. The ROM 413 stores a control program executed by the CPU 412, an embedded OS program, and so on. In the present embodiment, the CPU 412 executes each control program stored in the ROM 413 under the management of the embedded OS stored in the ROM 413 to control software such as for scheduling and for switching tasks.

The RAM 414 includes an SRAM, for example. The RAM 414 stores data such as data of program control variables, setting values registered by the user, and data for managing the mobile terminal device 104. The RAM 414 may also be used as a buffer for various works. The image memory 415 includes a memory such as a DRAM. The image memory 415 temporarily stores image data received via the WLAN unit 429 and image data read from the data storage unit 423 such that the CPU 412 processes the image data. The non-volatile memory 422 includes a memory such as a flash memory, for example, and stores data continuously even after the power to the mobile terminal device 104 is turned off. The memory configuration of the mobile terminal device 104 is not limited to the configuration described above. For example, the image memory 415 and the RAM 414 may be shared, or the data storage unit 423 may be used to back up data, for example. In the present embodiment, one example of the image memory 415 is a DRAM. However, any other storage medium such as a hard disk or a non-volatile memory may be used as the image memory 415.

The data conversion unit 416 performs analysis of data in various formats and data conversion such as color conversion and image conversion. The telephone unit 417 controls a telephone line and processes audio data input or output via the speaker unit 424 to implement telephone communication. The GPS 419 receives radio waves transmitted from satellites and acquires the position information such as the latitude and longitude of the current position of the mobile terminal device 104.

The camera unit 421 has a function of electronically recording and encoding an image input via a lens. The image data of an image captured by the camera unit 421 is stored in the data storage unit 423. The speaker unit 424 performs control to implement a function of inputting or outputting a voice for the telephone function or implement other functions such as an alarm notification. The power supply unit 425 is, for example, a portable battery and controls power supply to the mobile terminal device 104. The states of power supply include, for example, a depleted battery state in which the battery has no remaining capacity, a power-off state in which the power key 404 remains unpressed, an activated state in which the mobile terminal device 104 is normally activated, and a power-saving state in which the mobile terminal device 104 is activated and is in power saving mode.

The display unit 420 corresponds to the display unit 402 described with reference to Fig. 4A, and accepts various input operations and displays the operating state and status of the MFP 100, for example, under the control of the CPU 412. The operation unit 418 corresponds to the operation unit 403 described with reference to Fig. 4A. In response to a user operation, the operation unit 418 performs control to, for example, generate an electrical signal corresponding to the operation and output the electrical signal to the CPU 412.

In the mobile terminal device 104, the WLAN unit 429 is used to perform wireless communication and perform data communication with other devices such as the MFP 100. The WLAN unit 429 converts data into packets and transmits the packets to another device. Further, the WLAN unit 429 restores packets from another external device into original data and outputs the original data to the CPU 412. The WLAN unit 429 is a unit for implementing communication compliant with each WLAN standard. The WLAN unit 429 can operate concurrently in at least two communication modes including the wireless infrastructure mode and the P2P (WLAN) mode. The frequency bands used in these communication modes may be limited by hardware functions and capabilities.

### Configuration of Access Point

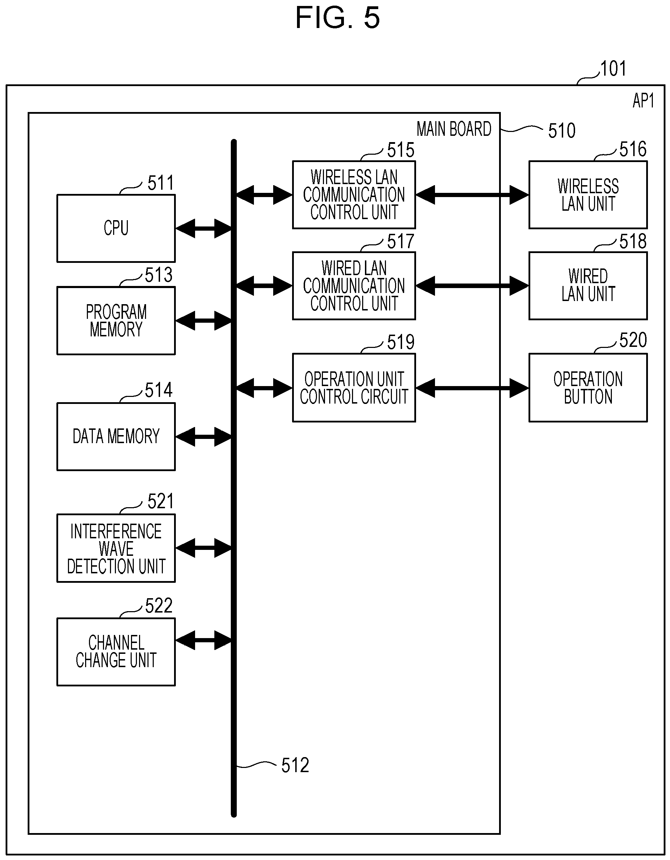

Fig. 5 is a block diagram illustrating the configuration of the access point AP 1 (101) having a wireless LAN access point function. The access point AP1 (101) includes a main board 510 for controlling the access point AP1 (101), a wireless LAN unit 516, a wired LAN unit 518, and an operation button 520.

A CPU 511 is in the form of a microprocessor disposed on the main board 510 and operates in accordance with a control program stored in a program memory 513 in ROM form and the content of a data memory 514 in RAM form. The program memory 513 and the data memory 514 are connected to the CPU 511 via an internal bus 512. The CPU 511 controls the wireless LAN unit 516 through a wireless LAN communication control unit 515 to perform wireless LAN communication with other communication terminal devices. Further, the CPU 511 controls the wired LAN unit 518 through a wired LAN communication control unit 517 to perform wired LAN communication with other communication terminal devices. The CPU 511 can control an operation unit control circuit 519 to accept an operation from the user using the operation button 520. The CPU 511 includes at least one processor.

The access point AP1 (101) further includes an interference wave detection unit 521 and a channel change unit 522.

The interference wave detection unit 521 performs a process of detecting an interference wave during wireless communication performed over a band in which DFS is implemented. In response to detection of an interference wave during wireless communication performed over a band in which DFS is implemented, the channel change unit 522 performs a process of changing a channel to be used when, for example, the channel immediately needs to be changed to an available channel.

The access point AP2 (102) has a configuration similar to that of the access point AP1 (101).

### P2P Communication Method

Next, a brief description will be given of P2P (WLAN) communication method for allowing devices to wirelessly communicate directly with each other without using an external access point in WLAN communication. P2P (WLAN) communication can be implemented by using a plurality of methods. For example, a communication device supports a plurality of modes for P2P (WLAN) communication and selectively uses one of the plurality of modes to execute P2P (WLAN) communication.

The following two P2P modes are provided:
Soft-AP mode; and
WFD mode.

A communication device capable of executing P2P communication may be configured to support at least one of these modes. However, even a communication device capable of executing P2P communication need not support all of these modes, and may be configured to support only parts of these modes.

A communication device (e.g., the mobile terminal device 104) having a WFD communication function calls an application (or a dedicated application, if any) for implementing the communication function in response to a user operation accepted via an operation unit of the communication device. Then, the communication device displays a screen of a user interface (UI) provided by the application to prompt the user to perform an operation, and can execute WFD communication in response to the acceptance of the operation performed by the user.

### Soft-AP Mode

In the Soft-AP mode, a communication device (e.g., the mobile terminal device 104) operates in the role of a client that requests various services. Then, the other communication device (e.g., the MFP 100) operates as a Soft-AP that is set by software to implement the function of an AP in the WLAN. Since commands and parameters transmitted and received in a wireless connection established between the client and the Soft-AP are commands and parameters defined by the Wi-Fi (registered trademark) standard, a description thereof will be omitted. The MFP 100 operating in the Soft-AP mode operates as a master station and determines a frequency band and a frequency channel. Accordingly, the MFP 100 can select which frequency band to use from among the 5 GHz and 2.4 GHz bands and which frequency channel to use in that frequency band.

### WFD Mode

The MFP 100 may be activated as a fixed master station in the WFD mode (i.e., an autonomous group owner). In this case, a group owner (GO) negotiation process for determining the roles is not performed. In this case, furthermore, the MFP 100 operates as a master station and determines a frequency band and a frequency channel. Accordingly, the MFP 100 can select which frequency band to use from among the 5 GHz and 2.4 GHz bands and which frequency channel to use in that frequency band.

### Wireless Infrastructure Mode

In the wireless infrastructure mode, communication devices (e.g., the mobile terminal device 104 and the MFP 100) that communicate with each other are connected to an external AP (e.g., the access point AP1 (101)) that controls the network, and the communication between the communication devices is performed via the external AP. In other words, communication is performed between the communication devices via a network established by the external AP. The mobile terminal device 104 and the MFP 100 individually discover the access point AP1 (101), transmit a connection request to the access point AP1 (101), and connect to the access point AP1 (101). As a result, these communication devices can communicate with each other in the wireless infrastructure mode via the access point AP1 (101). A plurality of communication devices may connect to different APs. In this case, data transfer is performed between the APs to allow communication between the communication devices. Since commands and parameters transmitted and received during communication between the communication devices via an access point or access points are commands and parameters defined by the Wi-Fi (registered trademark) standard, a description thereof will be omitted. In this case, the access point AP1 (101) determines a frequency band and a frequency channel. Accordingly, the access point AP1 (101) can select which frequency band to use from among the 5 GHz, 2.4 GHz, and 6 GHz bands and which frequency channel to use in that frequency band.

### Process in Response to Connection Destination Change Request from AP to STA

The mobile terminal device 104 and the MFP 100 support a feature publicly available as Wi-Fi Agile Multiband (trademark). The Wi-Fi Agile Multiband feature enables selection of an optimal environment in accordance with the changing situation of a Wi-Fi network. Specifically, a STA, such as the mobile terminal device 104 and the MFP 100, and an AP, such as the access point AP1 (101), exchange information on the network environment by using the series of IEEE 802.11 communication standards. The exchange of such information allows the AP to guide the STA to another AP, frequency band, or channel, or even to another cellular service in some cases (change the connection destination) when the network is congested.

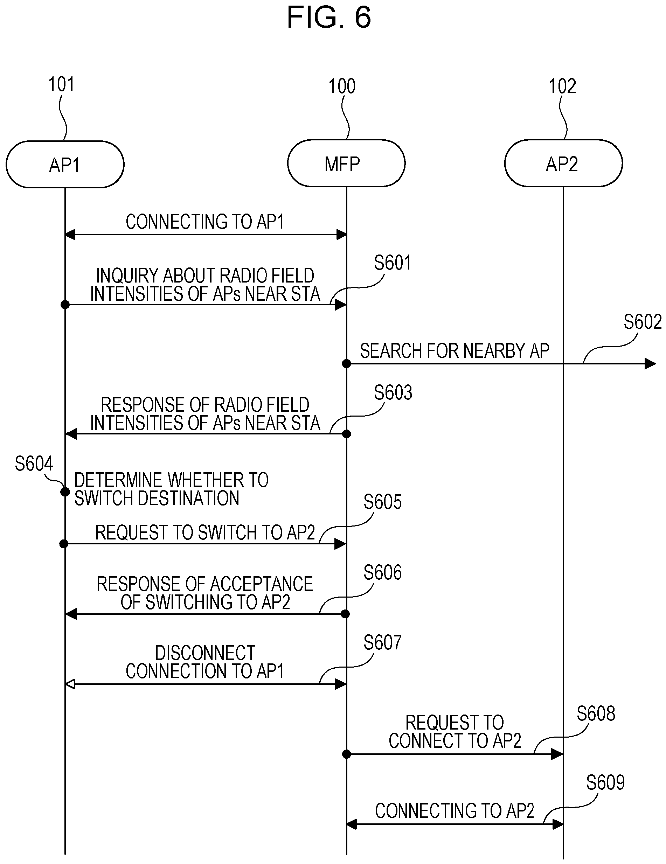

Fig. 6 is a sequence diagram of a process in which the MFP 100 switches a connection destination AP to connect to from the access point AP1 (101) to the access point AP2 (102) in accordance with a connection destination change request from the access point AP1 (101).

The processing executed by each device in the illustrated sequence is implemented by a CPU included in the device reading various programs stored in a memory such as a ROM included in the device into a RAM included in the device and executing the programs.

In the process illustrated in Fig. 6, in the initial state, the MFP 100 has established a connection with the access point AP1 (101) in the wireless infrastructure mode. When the MFP 100 and the access point AP1 (101) are connected to each other in the wireless infrastructure mode, the access point AP1 (101) has acquired information indicating whether the MFP 100 supports IEEE 802.11v. The following process is performed if information indicating that the MFP 100 supports IEEE 802.11v has been acquired by the access point AP1 (101).

In S601, the access point AP1 (101) transmits, to the MFP 100, an inquiry (measurement requests) about the radio field intensities of APs located near the MFP 100. The inquiry is transmitted as, for example, a beacon frame request or a beacon report request. That is, a request defined by the IEEE 802.11k standard can be used.

In S602, in response to the request received in S601, the MFP 100 receives frames transmitted from the APs located near the MFP 100 and measures the respective radio field intensities of the APs. As a result, the radio field intensity of each of a plurality of APs including the access points AP1 (101) and AP2 (102) is measured.

In S603, the MFP 100 transmits a list of radio field intensities of the APs located near the MFP 100, which are measured in S602, as a response to the request received in S601. The radio field intensities to be transmitted as the response may be, in addition to or instead of the information measured in S602, information stored in, for example, the RAM 214 and the non-volatile memory 215 of the MFP 100. The response is transmitted as, for example, Beacon Report or measurement reports.

In S604, the access point AP1 (101) determines whether to switch the connection destination of the MFP 100, on the basis of the network congestion recognized by the access point AP1 (101) and the radio field intensities received from the MFP 100 in S603. Examples of the factors for the access point AP1 (101) to determine to change the connection destination include a large number of STAs connected, a large amount of communication, reduced congestion in a network for another AP, the presence or absence of interfering radio waves, and a stoppage of the AP function. If the access point AP1 (101) determines to switch the connection destination of the MFP 100 and determines the service set identifier (SSID) of another AP to be designated as a destination to which the MFP 100 is to be connected, a channel, and a frequency band, the process proceeds to S605.

In S605, the access point AP1 (101) transmits an AP change request (connection destination change request) to the MFP 100. The connection destination change request includes information on the SSID of the other AP designated as the destination to which the MFP 100 is to be connected, the channel, and the frequency band, which are determined in S604.

A plurality of SSIDs may be designated. The connection destination change request is transmitted as, for example, a basic service set (BSS) transition management (BTM) Request. That is, a BTM Request frame defined by the IEEE 802.11v standard is transmitted. In the example illustrated in Fig. 6, the access point AP2 (102) is designated as the destination included in the connection destination change request.

In S606, if the MFP 100 follows the connection destination change request received in S605, the MFP 100 transmits to the access point AP1 (101) a response indicating acceptance of the switching of the connection destination. If the MFP 100 does not follow the connection destination change request, the MFP 100 may transmit a response indicating rejection of the switching of the connection destination. The response is transmitted as a BTM Response. In the example illustrated in Fig. 6, it is assumed that a response indicating acceptance of the switching of the connection destination is transmitted.

In S607, the access point AP1 (101) and the MFP 100 disconnect the connection in the wireless infrastructure mode.

In S608, the MFP 100 transmits a connection request to the access point AP2 (102) so as to connect to the access point AP2 (102) designated by the connection destination change request received in S605.

As a result, in S609, a connection between the MFP 100 and the access point AP2 (102) in the wireless infrastructure mode is established.

This mechanism allows the MFP 100 serving as an STA to change the connection destination from the access point AP1 (101) to the access point AP2 (102) in accordance with a connection destination change request from the access point AP1 (101) to which the MFP 100 is originally connected. The access points AP1 (101) and AP2 (102) may be located in different locations. That is, through the process illustrated in Fig. 6, the MFP 100 can switch the connection destination from an AP to which the MFP 100 is originally connected to another AP installed at a different position. The access points AP1 (101) and AP2 (102) may support different frequency bands among a plurality of frequency bands (two or three of the 2.4 GHz, 5 GHz, and 6 GHz bands) provided by the same device. That is, through the process illustrated in Fig. 6, the MFP 100 can switch the frequency band to another frequency band provided by the same device as the AP to which the MFP 100 is originally connected. For example, the MFP 100 can change the connection destination to an AP in the 6 GHz band in response to a connection destination change request.

The present embodiment describes an example in which a measurement request and a connection destination change request are transmitted from an AP by using a mechanism compliant with Wi-Fi Agile Multiband (trademark) and an STA responds to these requests. However, the present invention is not limited to this example. The present embodiment is also applicable when an STA responds and changes a connection destination AP (switching, deletion, or addition of an AP serving as a connection destination) in response to a measurement request and a connection destination change request transmitted from an AP by using a mechanism different from that in the example described above.

### Process of Suppressing Connection Destination Change Function in Conjunction with Designation of BSSID of Connection Destination AP

The following embodiment describes an example in which the function of automatically changing the connection destination AP in accordance with a connection destination change request is disabled (or suppressed) in conjunction with the setting in the MFP 100 to uniquely designate the MAC address (basic service set identifier (BSSID)) of a connection destination AP to connect to. That is, if a setting has been performed to uniquely designate the MAC address of the connection destination AP, the Wi-Fi Agile Multiband feature is disabled in conjunction with the setting. If the MAC address of the connection destination AP has not been uniquely set, basically, the function of automatically changing the connection destination AP in accordance with a connection destination change request is enabled, and the connection destination AP is switched in accordance with a connection destination change request.

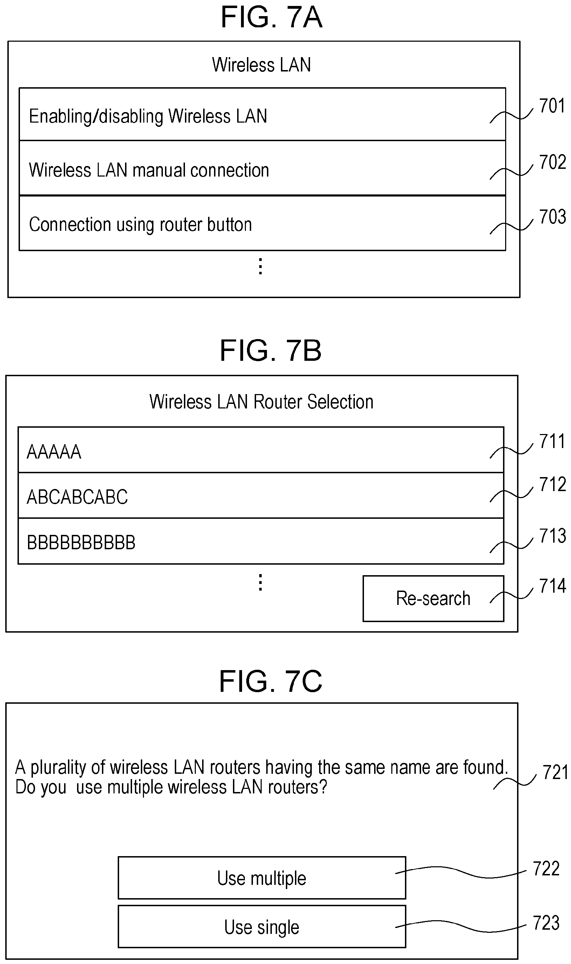

First, a setting for uniquely designating the MAC address of the connection destination AP will be described with reference to Figs. 7A to 7F. Figs. 7A to 7F illustrate example screens displayed on the display included in the operation display unit 220.

Fig. 7A illustrates a display example of a wireless LAN setting menu. The wireless LAN setting menu illustrated in Fig. 7A is a screen displayed when, of the menu items included in the menu for communication setting described above with reference to Fig. 3C, the item "Wireless LAN" (the top option in Fig. 3C) is selected. When, of menu items 701 to 703 included in the wireless LAN setting menu, the menu item 702 ("Wireless LAN manual connection") is selected, a wireless LAN router (an AP connectable in the infrastructure mode) is searched for. In Figs. 7A to 7C, "wireless LAN router" has the same meaning as an AP connectable in the infrastructure mode. Accordingly, in the display examples, the expression "wireless LAN router" may be interchangeably used with the term "infrastructure AP" or the like. The term "search", as used here, refers to a process including measurement of the radio field intensity, and is a search for an AP (nearby AP) from which a radio wave can be detected by the wireless unit 226. Such a search is hereinafter referred to as an AP search. During the AP search, the message "Searching for a wireless LAN router" is displayed on the display. When the search for a wireless LAN router is completed, a wireless LAN router selection screen illustrated in Fig. 7B is displayed.

Fig. 7B illustrates a display example of a wireless LAN router selection screen. The illustrated wireless LAN router selection screen is displayed as a result of selecting the menu item 702 on the screen illustrated in Fig. 7A and searching for a wireless LAN router. As a search result, a list of extended service set identifiers (ESSID) of nearby APs from which radio waves can be detected by the wireless unit 226 is displayed. In the illustrated example, three ESSIDs are displayed on one screen. If more than three APs are successfully detected as a result of the AP search, the ESSIDs of the fourth and subsequent APs can be displayed by scrolling down. When one router device has a router function for a plurality of frequency bands (AP function for a plurality of frequency bands), if the frequency bands are detectable as a result of the AP search, a plurality of different wireless LAN routers for the respective frequency bands are displayed as an AP search result. The plurality of frequency bands are, for example, three frequency bands, namely, the 2.4 GHZ, 5 GHZ, and 6 GHZ bands. The user can select the ESSID of an AP to which the MFP 100 is to be connected from among the displayed ESSIDs. The user can touch a "re-search" icon 714 to redo the AP search. When one of the plurality of ESSIDs displayed on the wireless LAN router selection screen illustrated in Fig. 7B is selected, a screen for accepting input of a network key (wired equivalent privacy (WEP) key, passphrase, or password), which is authentication information of the network specified by the selected ESSID, is displayed. If the network key input on the screen for accepting input of a network key is correct, a connection to the AP having the selected ESSID can be made.

Fig. 7C illustrates a display example of a screen displayed when a plurality of APs having the same ESSID as the ESSID selected on the wireless LAN router selection screen illustrated in Fig. 7B are included in the search result. The screen illustrated in Fig. 7C displays a message 721 and options 722 and 723.

The message 721 indicates that the APs detected by the AP search include a plurality of APs having the same name (ESSID) as the ESSID selected by the user on the wireless LAN router selection screen. The message 721 is a message for inquiring whether to use a plurality of APs (wireless LAN routers) having the same name (the same SSID) as the ESSID selected by the user. The option 722 is an option for selecting the use of the plurality of APs.

The use of the plurality of APs means that all of the plurality of APs having the same ESSID are candidates for use. Specifically, when the option 722 is selected, control is performed such that when connecting to an AP, the MFP 100 connects one AP having the best connection conditions among the plurality of APs having the same ESSID. In other words, the plurality of APs having the same ESSID are selectively used in accordance with the connection conditions. The option 723 is an option for selecting the use of one of the plurality of APs having the same ESSID. When the option 723 is selected, the MFP 100 requests the input of a BSSID for identifying one AP to be used among the plurality of APs having the same ESSID.

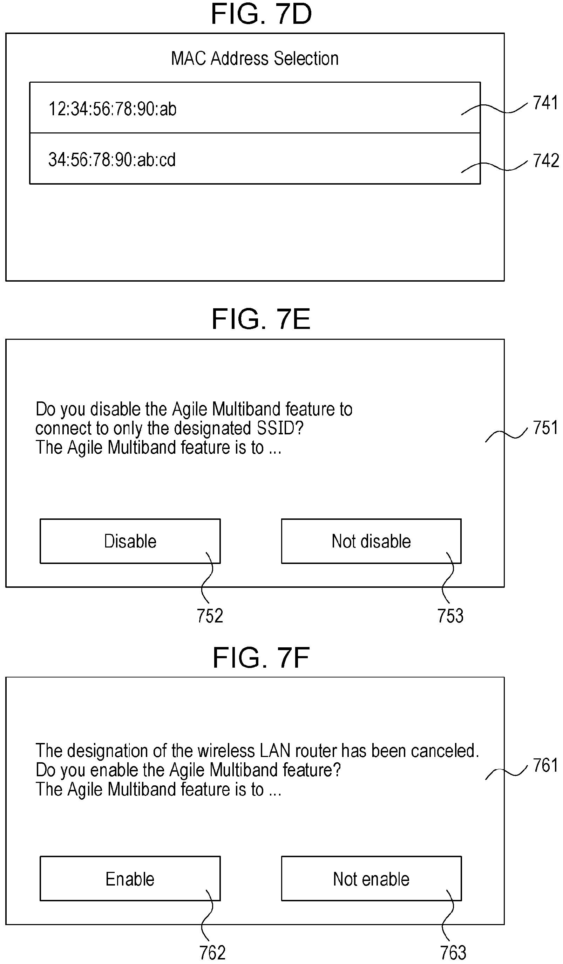

Fig. 7D illustrates a display example of a MAC address selection screen displayed when the option 723 is selected on the screen illustrated in Fig. 7C. The MAC address corresponds to the BSSID. The MAC address selection screen illustrated in Fig. 7D displays a list of BSSIDs of the plurality of APs having the same ESSID as the ESSID selected by the user on the wireless LAN router selection screen illustrated in Fig. 7B among the APs detected by the AP search. In the illustrated example, options 741 and 742 are displayed as BSSID options. The user checks the MAC address (BSSID) of the AP to be used and selects an option that matches the MAC address (BSSID) of the AP to be used from among the options 741 and 742. The MAC address indicated by the selected option is recorded in the non-volatile memory 215 or the ROM 213 as the AP to which the MFP 100 is to be connected. As a result, the MAC address of the AP to connect to is uniquely set. Accordingly, in response to an operation of designating the MAC address of the connection destination, when the MFP 100 being connected to no AP is to connect to an AP, control is performed such that the MFP 100 connects to the AP having the designated MAC address and does not connect to other APs. In the way described above, it is possible to perform setting for uniquely designating the MAC address of the connection destination AP.

After the option 723 is selected on the screen illustrated in Fig. 7C, a guide message prompting the user to check the MAC address (i.e., the BSSID) of the wireless LAN router (i.e., the AP) to be used may be displayed before the MAC address selection screen illustrated in Fig. 7D is displayed. The guide message is, for example, "Please check the MAC address of the wireless LAN router to use by referring to the manual of the wireless LAN router".

Fig. 7E illustrates a screen displayed when any option is selected on the MAC address selection screen illustrated in Fig. 7D. The illustrated screen is a display example of a selection screen for inquiring whether to disable the Agile Multiband feature in conjunction with the selection of an option. In Fig. 7E, a message 751 and options 752 and 753 are displayed. The message 751 includes a message for inquiring whether to disable the Agile Multiband feature in conjunction with a setting to uniquely designate the MAC address (BSSID) of the connection destination AP. The message 751 also includes a description of the Agile Multiband feature (e.g., a function of automatically switching the connection destination in accordance with a connection destination change request and a connection destination change function).

The option 752 is an option for selecting to disable the Agile Multiband feature (the function of automatically switching the connection destination in accordance with a connection destination change request; hereinafter simply referred to as a connection destination change function). When the option 752 is selected, the connection destination change function is set to be disabled, and the setting of disabling the connection destination change function is recorded in the non-volatile memory 215 or the ROM 213. When the connection destination change function is set to be disabled, the CPU 212 of the MFP 100 performs control such that no connection destination change request is transmitted from the AP to the MFP 100, or performs control such that no change is made to the connection destination AP even in a case where a connection destination change request is received. As described above, when the option 752 is selected, the function of automatically changing the connection destination AP in accordance with a connection destination change request (i.e., the connection destination change function) is disabled in conjunction with a setting to uniquely designate the MAC address of the connection destination AP.

If a setting is performed to uniquely designate a connection destination AP by the MAC address and the connection destination change function is enabled, the following unnatural situation may occur. Specifically, although a connection destination AP has been uniquely designated by the MAC address, the connection destination is changed to another AP in accordance with a connection destination change request. Such an unnatural situation may occur. However, as in the present embodiment, disabling the connection destination change function in conjunction with a setting to uniquely designate the MAC address of the connection destination AP prevents the setting that causes the unnatural situation from being applied and allows the user to use a wireless connection function without confusion.

The option 753 is an option for selecting not to disable the connection destination change function. When the option 753 is selected, the setting state of the connection destination change function set before the selection of the option 753 is maintained unchanged. That is, in a case where the connection destination change function has originally been set to be enabled, in response to receipt of a connection destination change request, the CPU 212 of the MFP 100 performs control to change the connection destination AP in accordance with the change request. In this case, a situation is permitted in which although a connection destination AP has been uniquely designated by the MAC address, the connection destination is changed to another AP in accordance with a connection destination change request.

In contrast to Fig. 7E, Fig. 7F illustrates a display example of a screen displayed when the setting is changed from a state in which the MAC address of the AP to connect to is designated to a state in which no MAC address is designated. The illustrated screen inquires whether to enable the connection destination change function in conjunction with the change of the setting. In Fig. 7F, a message 761 and options 762 and 763 are displayed. The message 761 includes a message for inquiring whether to enable the connection destination change function in conjunction with a change to a setting not to uniquely designate the MAC address (BSSID) of the connection destination AP. The message 761 also includes a description of the connection destination change function. The option 762 is an option for selecting to enable the connection destination change function. The option 763 is an option for selecting not to enable the connection destination change function. When the option 763 is selected, the setting state of the connection destination change function set before the selection of the option 763 is maintained unchanged.

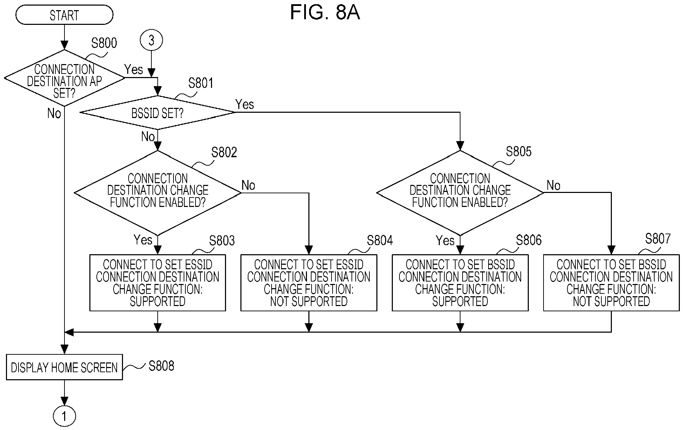

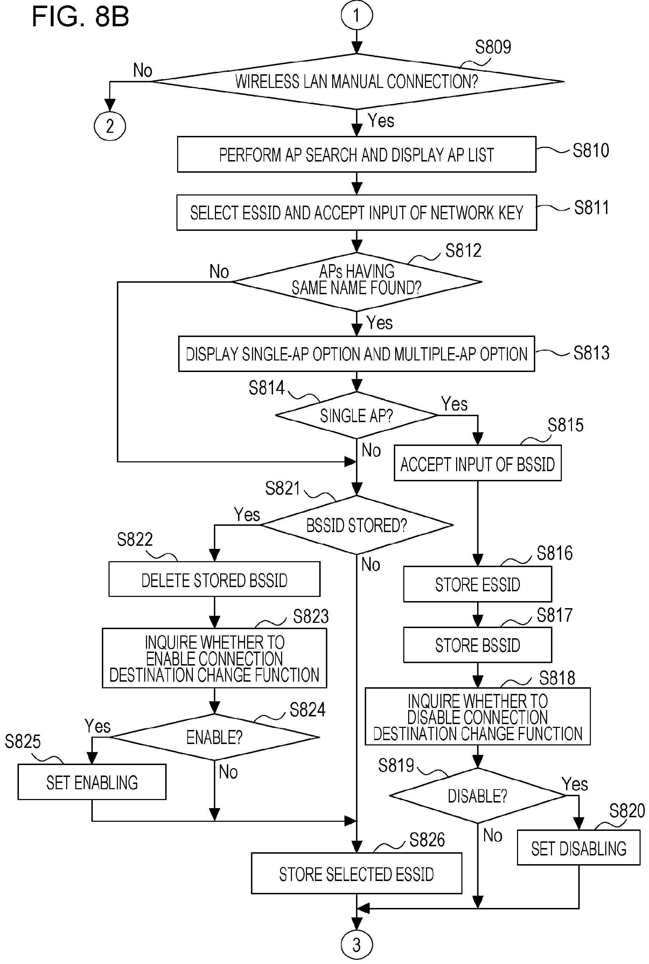

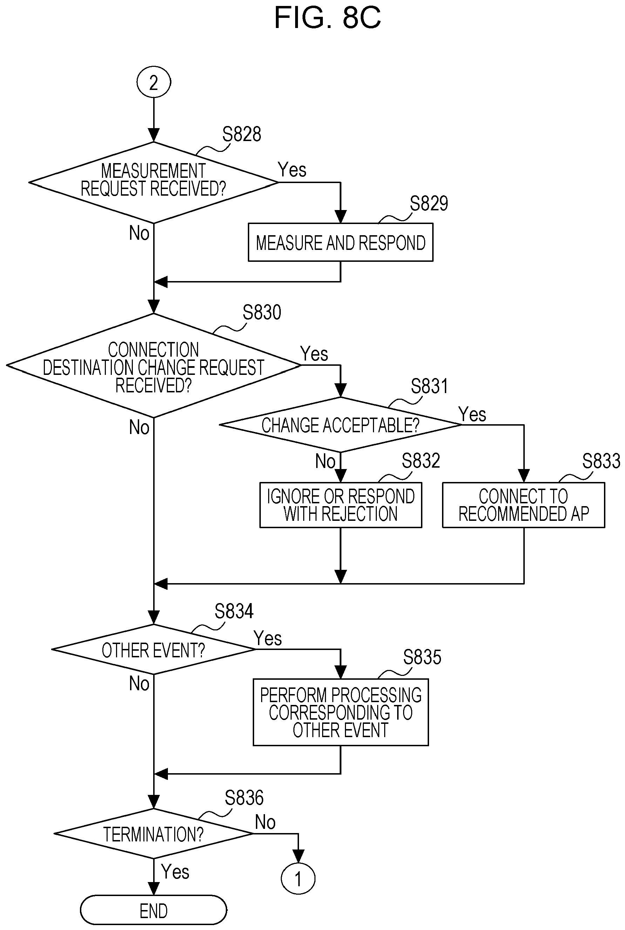

Figs. 8A to 8C are a flowchart of a process including processing of suppressing the connection destination change function in conjunction with designation of the BSSID of a connection destination AP. The illustrated process is implemented by the CPU 212 loading a program stored in the ROM 213 into the RAM 214 and executing the program. When power to the MFP 100 is turned on, the process illustrated in Figs. 8A to 8C is started.

In S800, the CPU 212 determines whether information on a connection destination AP to connect to (an AP to be connected) has been set. For example, the method using the wireless LAN router selection screen illustrated in Fig. 7B described above is used. If connection information including the ESSID of the AP to connect to and the network key has been set (registered and stored), the CPU 212 determines that the connection destination AP has been set. The connection destination AP may be set by any other method such as a method using Wi-Fi Protected Setup (WPS) (a method performed by operating the menu item 703).

If the connection destination AP has been set, the process proceeds to S801; otherwise, the process proceeds to S808. If the connection destination AP has not been set, the process may skip S808 and proceed to S810 to guide the user to a screen for setting the connection destination AP.

In S801, the CPU 212 determines whether the BSSID has been set as information on the set connection destination AP. As described above with reference to Fig. 7D, if the connection destination AP has been uniquely designated by the MAC address (BSSID), the process proceeds to S805 because the BSSID has been set; otherwise, the process proceeds to S802.

In S802, the CPU 212 refers to the setting state of the connection destination change function recorded in the ROM 213 and determines whether the connection destination change function is enabled. If the connection destination change function is enabled, the process proceed to S803; otherwise (if the connection destination change function is disabled), the process proceed to S804.

In S803, the CPU 212 uses the stored connection information to control the wireless unit 226 to connect to the AP having the set (registered or stored) ESSID. Specifically, the CPU 212 performs an AP search, and if one AP whose ESSID matches the stored ESSID is detected, the CPU 212 connects to the detected AP. On the other hand, the CPU 212 performs an AP search, and if a plurality of APs whose ESSIDs match the stored ESSID are detected, the CPU 212 connects to the AP having the best radio wave condition among the plurality of detected APs having the same ESSID, regardless of the BSSID. If a plurality of ESSIDs and connection information are stored, the CPU 212 connects to the AP having the best radio wave condition among the APs whose ESSIDs match any of the stored ESSIDs as a result of the AP search.

In S803, further, when connecting to the AP having the set ESSID, the CPU 212 transmits information indicating that the MFP 100 supports the connection destination change function to the AP, and connects to the AP. Specifically, for example, before wirelessly connecting to the AP, the CPU 212 creates data of an Association Request frame including information indicating that the MFP 100 supports IEEE 802.11v. Then, the CPU 212 performs an operation including transmitting the created data of the Association Request frame to perform a process of wirelessly connecting to the AP. The information indicating that the MFP 100 supports IEEE 802.11v is, more specifically, information indicating that, for example, a flag of BSS Transition Support for Association Request is turned on. As a result, the connection destination AP recognizes that the MFP 100 supports the connection destination change function (enabled), and a measurement request or a connection destination change request is transmitted from the currently connected AP to the MFP 100.

In S804, the CPU 212 uses the stored connection information to control the wireless unit 226 to connect to the AP having the set (registered or stored) ESSID. The method for identifying the connection destination AP is similar to that in S803.

In S804, furthermore, when connecting to the AP having the set ESSID, the CPU 212 transmits information indicating that the MFP 100 does not support the connection destination change function to the AP, and connects to the AP. Specifically, for example, before wirelessly connecting to the AP, the CPU 212 creates data of an Association Request frame including information indicating that the MFP 100 does not support IEEE 802.11v. Then, the CPU 212 performs an operation including transmitting the created data of the Association Request frame to perform a process of wirelessly connecting to the AP. The information indicating that the MFP 100 does not support IEEE 802.11v is, more specifically, information indicating that, for example, a flag of BSS Transition Support for Association Request is turned off. As a result, the connection destination AP recognizes that the MFP 100 does not support the connection destination change function (disabled), and a measurement request or a connection destination change request is not transmitted from the currently connected AP to the MFP 100.

In S805, as in S802, the CPU 212 refers to the content of the setting of the connection destination change function recorded in the ROM 213 and determines whether the connection destination change function is enabled. If the connection destination change function is enabled, the process proceed to S806; otherwise (if the connection destination change function is disabled), the process proceed to S807.

In S806, the CPU 212 uses the stored connection information to control the wireless unit 226 to connect to the AP having the set (registered or stored) MAC address (BSSID). At this time, as described in S803, the CPU 212 transmits information indicating that the MFP 100 supports the connection destination change function to the AP, and connects to the AP.

In S807, the CPU 212 uses the stored connection information to control the wireless unit 226 to connect to the AP having the set (registered or stored) MAC address (BSSID). At this time, as described in S804, the CPU 212 transmits information indicating that the MFP 100 does not support the connection destination change function to the AP, and connects to the AP.

In S808, the CPU 212 displays the home screen described above with reference to Figs. 3A and 3B.

In S809, the CPU 212 displays the wireless LAN setting menu illustrated in Fig. 7A by selection of the communication setting on the home screen and then selection of the wireless LAN, and determines whether the menu item 702 is operated (i.e., whether an operation of giving an instruction for "Wireless LAN manual connection" is performed). If the operation of giving an instruction for "Wireless LAN manual connection" is performed, the process proceeds to S810; otherwise, the process proceeds to S828.

In S810, the CPU 212 performs an AP search and displays an ESSID list screen as a search result. The ESSID list screen corresponds to the wireless LAN router selection screen illustrated in Fig. 7B.

In S811, the CPU 212 accepts a user operation for selecting one of the ESSIDs displayed on the ESSID list screen (Fig. 7B) and a user operation for inputting the network key for the selected ESSID. The following description is made assuming that a correct network key has been input. In S811, the selection of an ESSID is accepted, and the input of the network key for the selected ESSID is accepted, by way of example but not limitation. The input of a network key may be accepted after an ESSID is selected and after it is checked in S812 whether APs having the same name are present. Alternatively, the input of a network key may be accepted after an ESSID is selected and after a BSSID is designated in S815 after it is checked in S812 whether APs having the same name are present. That is, when the selection of an ESSID is accepted in S811, the process may proceed to S812 without the acceptance of the input of a network key. If Yes is obtained in S812, the input of a network key may be accepted immediately after S815. If No is obtained in S812, the input of a network key may be accepted immediately after S812.

In S812, the CPU 212 determines whether a plurality of APs having the same ESSID (APs having the same name) as the ESSID selected in S811 are included in the result of the AP search performed in S810. If it is determined that a plurality of APs having the same name are included, the process proceeds to S813; otherwise, the process proceeds to S821.

In S813, the CPU 212 displays a screen described with reference to Fig. 7C for selecting whether to use one of the APs having the same name or a plurality of APs among the APs having the same name.

In S814, the CPU 212 determines whether an operation of selecting to use one of the APs having the same name (i.e., an operation of selecting the option 723) is performed on the screen displayed in S813. If the operation of selecting to use one AP is performed, the process proceeds to S815. Otherwise, that is, if an operation of selecting to use a plurality of APs (i.e., an operation of selecting the option 722) is performed, the process proceeds to S821.

In S815, the CPU 212 displays a BSSID input screen to accept an input from the user to designate a BSSID. Specifically, the CPU 212 displays the MAC address selection screen described with reference to Fig. 7D and accepts an operation of selecting one of the plurality of options indicating the BSSIDs.

In S816, the CPU 212 records the ESSID of the AP having the BSSID corresponding to the option selected in S815 (the ESSID selected in S811) in the ROM 213 as the setting of the connection destination AP.

In S817, the CPU 212 records the BSSID corresponding to the option selected in S815 in the ROM 213 as the setting of the connection destination AP. Accordingly, the BSSID of the AP to be connected is set to set the AP to be connected.

In S818, the CPU 212 displays a screen for inquiring whether to disable the connection destination change function in conjunction with the designation of a BSSID. Specifically, the CPU 212 displays the selection screen described with reference to Fig. 7E and accepts a user selection as to whether to disable the connection destination change function.

In S819, the CPU 212 determines whether the option (i.e., the option 752) for selecting to disable the connection destination change function is selected on the screen illustrated in Fig. 7E. If the option (i.e., the option 752) for selecting to disable the connection destination change function is selected, the process proceeds to S820. On the other hand, if the option (i.e., the option 753) for selecting not to disable the connection destination change function is selected, the process returns to S801 and then proceeds to S806 or S807, and the CPU 212 connects to the AP having the BSSID stored in S817.

In S820, the CPU 212 sets the connection destination change function to be disabled, and records the setting of the connection destination change function in the ROM 213. Then, the process returns to S801 and then proceeds to S807, and the CPU 212 connects to the AP having the BSSID stored in S817 in such a manner that the connection destination change function is not supported.

In S821, the CPU 212 determines whether the BSSID has been stored in the ROM 213 as information (setting) on the connection destination AP. If the BSSID has been stored as the information (setting) on the connection destination AP, the process proceeds to S822; otherwise, the process proceeds to S826. It is determined that the BSSID has been stored as the information (setting) on the connection destination AP if the BSSID has been designated as the information on the previous connection destination AP set before the current series of operations for newly setting a connection destination AP is performed.

In S822, the CPU 212 deletes the BSSID stored in the ROM 213 as the information on the previous connection destination AP.

In S823, the CPU 212 displays a screen for inquiring whether to enable the connection destination change function in conjunction with a change from the setting in which the BSSID has been designated to the setting in which no BSSID is designated. Specifically, the selection screen described with reference to Fig. 7F is displayed.

In S824, the CPU 212 determines whether the option (i.e., the option 762) for selecting to enable the connection destination change function is selected on the screen illustrated in Fig. 7F. If the option (i.e., the option 762) for selecting to enable the connection destination change function is selected, the process proceeds to S825. On the other hand, if the option (i.e., the option 763) for selecting not to enable the connection destination change function is selected, the process returns to S801 and then proceeds to S803 or S804, and the CPU 212 connects to the AP having the ESSID selected in S811.

In S825, the CPU 212 sets the connection destination change function to be enabled, and records the setting of the connection destination change function in the ROM 213. Then, the process returns to S801 and then proceeds to S803, and the CPU 212 connects to the AP having the ESSID selected in S811 in such a manner that the connection destination change function is supported.

In S826, the CPU 212 records the ESSID selected in S811 in the ROM 213 as the setting of the connection destination AP. Then, the process returns to S801 and then proceeds to S803 or S804, and the CPU 212 connects to the AP having the ESSID selected in S811.

In S828, the CPU 212 determines whether a measurement request (the measurement requests described above in S601 in Fig. 6) is received from the currently connected AP. If a measurement request is received, the process proceed to S829; otherwise, the process proceed to S830.

In S829, as described in S602 and S603 in Fig. 6, the CPU 212 uses the wireless unit 226 to measure the radio field intensities of APs located near the MFP 100, and transmits a list of the radio field intensities of the APs to the currently connected AP as Beacon Report.

In S830, the CPU 212 determines whether a connection destination change request (described above in S605) is received from the currently connected AP. If a connection destination change request is received, the process proceed to S831; otherwise, the process proceed to S834.

In S831, the CPU 212 determines whether the change of the connection destination based on the received connection destination change request is acceptable. If it is determined that the change of the connection destination is acceptable, the process proceeds to S833; otherwise, the process proceeds to S832. One example of the state in which the change of the connection destination is not acceptable (or unacceptable state) is a state in which printing is in progress with print data (print job) being received from another information processing apparatus via the currently connected AP. Another example is, for example, a power-saving state that keeps clocks down relative to clocks used for a process of connecting to an AP. In such an unacceptable state, the CPU 212 performs control such that no temporary change is made to the connection destination AP in accordance with a connection destination change request regardless of the enabled or disabled state of the connection destination change function recorded in the ROM 213.

In S832, the CPU 212 responds to and rejects the connection destination change request received in S830 or ignores the connection destination change request without responding. Then, the CPU 212 performs control such that no change is made to the connection destination AP in accordance with the connection destination change request.

In S833, the CPU 212 responds to the connection destination change request received in S830 and transmits information indicating acceptance of the request to the currently connected AP. Then, the CPU 212 disconnects the connection to the currently connected AP, and executes a process of connecting to an AP recommended for connection included in the connection destination change request received in S830.

That is, the CPU 212 changes the connection destination AP in accordance with the connection destination change request. More specifically, the CPU 212 performs the processing described in S606 to S609 in Fig. 6. In the illustrated example, the connection destination AP is changed in accordance with a connection destination change request in a situation where the BSSID of the AP to be connected has not been set, the connection destination change function is enabled, and the connection destination change request is acceptable. Even if the BSSID of the AP to be connected has been set, the connection destination AP is changed in accordance with a connection destination change request in a situation where the connection destination change function is enabled and the connection destination change request is acceptable.

In S834, the CPU 212 determines whether any other event has occurred. If any other event has occurred, the process proceeds to S835; otherwise, the process proceeds to S836.

In S835, the CPU 212 performs processing corresponding to the event that has occurred. For example, the CPU 212 performs processing involving copying or cloud communication in response to a key operation or a touch panel operation from the operation display unit 205. If an operation event that gives an instruction to perform copying has occurred, in S835, the CPU 212 drives the reading unit 219 to read a document and causes the printing unit 222 to print an image of the read document to perform copying.

If a user operation for selecting an item for setting the connection destination change function in the wireless LAN setting menu and changing the setting on a setting screen for enabling or disabling the connection destination change function is performed, in S835, the CPU 212 changes the setting in accordance with the user operation. This setting is to be changed by the processing of S820 or S825 described above. The state of being set to be "disabled" is a suppression state in which a change of the connection destination AP based on a connection destination change request suppressed. If the BSSID has been set as the setting of the AP to be connected on the setting screen for enabling or disabling the connection destination change function, the CPU 212 may perform control to prevent the connection destination change function from being changed to be enabled. In this case, for example, the option for enabling the connection destination change function is grayed out (or an indication of the operation disabled is displayed) to display an indication that the BSSID of the AP to be connected has been set. Alternatively, in response to an operation for changing the setting of the connection destination change function to enable the connection destination change function, a warning indicating that the BSSID has been set as the setting of the AP to be connected may be displayed. Alternatively, the setting screen for enabling or disabling the connection destination change function may display an indication that the BSSID has been set as the setting of the AP to be connected.

In S836, the CPU 212 determines whether a termination event such as turning off the power has occurred. If no termination event has occurred, the process returns to S809, and the processing is repeated. If a termination event has occurred, the process illustrated in Figs. 8A to 8C ends.

In the process described above, in response to a connection destination AP being uniquely designated by the MAC address (BSSID), processing is performed to disable the connection destination change function (or set the suppression state) (S818 to S820). This processing can suppress the occurrence of an unnatural situation in which although a connection destination AP has been uniquely designated by the MAC address, the connection destination is changed to another AP in accordance with a connection destination change request. That is, the user can use the wireless connection function without confusion. In addition, in response to the designation of the BSSID of the connection destination AP being cancelled, processing is performed to enable the connection destination change function (or cancel the suppression state) (S823 to S825).

This processing can suppress the occurrence of a situation in which although a connection destination AP has not been uniquely designated by a MAC address, the destination is not changeable to another AP in accordance with a connection destination change request. Accordingly, the user can use the wireless connection function without confusion and can more comfortably use the connection destination change function. That is, the present embodiment makes it possible to set the BSSID of an AP to be connected and change a connection destination in accordance with a connection destination change request from an AP without confusing a user.

In the embodiment described above, in response to the designation of the BSSID of the connection destination AP, an inquiry is made as to whether to disable the connection destination change function in S818 in conjunction with the designation of the BSSID, and the connection destination change function is set to be disabled in S820 in response to the user performing an operation for disabling the connection destination change function, by way of example but not limitation. The connection destination change function may be automatically set to be disabled in response to the designation of the BSSID of the connection destination AP, without the processing of inquiry being performed in S818. In this case, the process proceeds from S817 to S820 without performing the processing of S818 and S819. Also in this case, a message or an icon may be displayed to indicate that the connection destination change function has been automatically disabled. The processing for enabling the connection destination change function is also performed in a similar way. That is, the connection destination change function may be automatically set to be enabled in response to the cancellation of the designation of the BSSID of the connection destination AP, without the processing of inquiry being performed in S823. In this case, the process proceeds from S822 to S825 without performing the processing of S823 and S824. Also in this case, a message or an icon may be displayed to indicate that the connection destination change function has been automatically enabled.

The method for designating the MAC address (BSSID) of the connection destination AP is not limited to the method described above, and any other method may be used. Even in this case, in response to the designation of the BSSID of the connection destination AP, processing similar to the processing of S818 to S820 is performed, and a process of disabling the connection destination change function is performed. Also, in response to the cancellation of the designation of the BSSID of the connection destination AP, processing similar to the processing of S823 to S825 is performed, and a process of enabling the connection destination change function is performed.

In the embodiment described above, if the connection destination change function has been set to be disabled, when connecting to the AP, the CPU 212 transmits information indicating that the MFP 100 does not support the connection destination change function to the AP, and connects to the AP, thereby preventing the connection destination from being changed in accordance with a connection destination change request, by way of example but not limitation. Any other method for performing control may be performed in response to the connection destination change function being set to be disabled, as long as the control is performed such that a change of the connection destination AP based on a connection destination change request from the AP is suppressed. For example, in response to actual receipt of a connection destination change request although information indicating that the MFP 100 supports the connection destination change function is transmitted to an AP at the time of connection to the AP, the CPU 212 may perform control to ignore or respond to and reject the connection destination change request, as described in S832, such that no change of the destination based on the received connection destination change request is performed. Further, in response to receipt of a measurement request, the CPU 212 may perform control to make a response (false response) by transmitting information indicating that the radio wave reception status of an AP other than the currently connected AP is worse than the status actually measured (e.g., a weak radio wave, much noise, or an undetectable radio wave). This makes it expectable to suppress transmission of a request from the currently connected AP to change the connection destination to another AP. Accordingly, a change of the connection destination in accordance with a connection destination change request is suppressed.

The various types of control described above as being performed by the CPU 212 may be performed by one piece of hardware, or a plurality of pieces of hardware (e.g., a plurality of processors or circuits) may share processing to control the overall operation of the MFP 100.

While the present invention has been described in detail with reference to embodiments thereof, the present invention is not limited to these specific embodiments and may be modified in various ways without departing from the scope of the invention. Such modifications also fall within the scope of the present invention. The embodiments described above are examples of the present invention, and any combination thereof may be used.

In the embodiments described above, furthermore, the present invention is applied to an MFP, by way of example. However, the present invention is not limited to the illustrated example, and is applicable to any wireless device that functions as an STA capable of performing a process in accordance with a connection destination change request from an AP. That is, the present invention is applicable to a PC, a PDA, a tablet terminal, a mobile phone terminal such as a smartphone, a music player, a game device, an electronic book reader, a smart watch, and various measurement devices (sensor devices) such as a thermometer and a hygrometer. The present invention is also applicable to digital cameras (including a still camera, a video camera, a network camera, and a security camera), a printer, a scanner, and a drone. The present invention is also applicable to a video output device, an audio output device (e.g., a smart speaker), a media streaming player, and a wireless LAN slave device (adapter) connectable to a Universal Serial Bus (USB) terminal or a LAN cable terminal. The video output device includes, for example, a device such as a set-top box and is configured to acquire (download) a moving image or a still image from the Internet, which is identified by a uniform resource locator (URL) specified by an electronic apparatus, and output the moving image or the still image to a display device connected via a video output terminal such as a High-Definition Multimedia Interface (HDMI (registered trademark)) video output terminal. This configuration implements streaming playback on the display device and implements mirroring display (display that allows content displayed on the electronic apparatus to also be displayed on the display device). In addition, the video output device includes media players such as a hard disk recorder, a Blu-ray recorder, and a DVD recorder, a head mounted display, a projector, a television, a display device (monitor), and a signage device, for example. The present invention is also applicable to Wi-Fi-enabled devices called smart home appliances, such as a smart air conditioner, a smart refrigerator, a smart washing machine, a smart vacuum cleaner, a smart oven, a smart microwave oven, a smart lighting system, a smart heater, and a smart cooler.

According to an embodiment of the present invention, it is possible to set an AP to be connected and change a connection destination in accordance with a connection destination change request from an AP without confusing a user.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An electronic apparatus (100) comprising:
acceptance means (220) configured to accept a user operation for setting a connection destination access point (AP) to connect to;
receiving means (226) configured to receive a change request from a currently connected AP to change the connection destination AP from the currently connected AP to an another AP;
control means (212) configured to perform control to wirelessly connect to a first AP, the first AP being set in accordance with an operation accepted by the acceptance means; and
print control means (224), wherein
in a case where the receiving means receives the change request after a wireless connection is made to the first AP set in accordance with the operation accepted by the acceptance means, changing the connection destination AP from the first AP based on the change request is not performed.

2. The electronic apparatus according to Claim 1, wherein
the first AP is an AP set in accordance with a user operation accepted by the acceptance means, the user operation being an operation for designating the connection destination AP.

3. The electronic apparatus according to Claim 2, wherein
the first AP is an AP set in accordance with the user operation accepted by the acceptance means, the user operation being an operation for designating a basic service set identifier (BSSID) of the connection destination AP.

4. The electronic apparatus according to any one of Claims 1 to 3, wherein
the control means performs, when wirelessly connecting to the first AP, control to transmit predetermined information to the first AP and to connect to the first AP, the predetermined information being information indicating that a function of changing the connection destination AP based on the change request is supported by the electronic apparatus.

5. The electronic apparatus according to Claim 4, wherein
the predetermined information indicates that the electronic apparatus supports IEEE 802.11v.

6. The electronic apparatus according to any one of Claims 1 to 5, wherein
the control performs control to,
in response to receipt of the change request from the first AP,
transmit a response indicating rejection of the change request to the first AP.

7. The electronic apparatus according to any one of Claims 1 to 6, wherein
the control means performs control to,
in a case where a second user operation for setting connection to a second AP is accepted by the acceptance means during wireless connection to the first AP set in accordance with the operation accepted by the acceptance means,
connect to the second AP.

8. The electronic apparatus according to any one of Claims 1 to 7, wherein the print control means (224) performs control to execute printing based on print data received from another information processing apparatus via the currently connected AP.

9. The electronic apparatus according to any one of Claims 1 to 8, further comprising:
inkjet or electrophotographic printing means (222).

10. The electronic apparatus according to any one of Claims 1 to 9, wherein the electronic apparatus performs at least one of:
a process of connecting to and communicating with an AP in compliance with an IEEE 802.11ax standard;
a process compliant with Orthogonal Frequency Division Multiple Access (OFDMA);
a process compliant with Target Wake Time (TWT); and
a process of changing the connection destination AP in accordance with the change request to change the connection destination AP to an AP using a 6 GHz band.

11. A method for controlling a print control apparatus (104), the method comprising:
accepting a user operation for setting a connection destination access point (AP) to connect to;
receiving a change request from a currently connected AP to change the connection destination AP from the currently connected AP to an another AP;
performing control to wirelessly connect to a first AP, the first AP being set in accordance with an accepted operation; and
performing, in a case where the change request is received after a wireless connection is made to the first AP, control not to change the connection destination AP from the first AP, the change being based on the change request.

12. A computer-readable storage medium having stored thereon a program, which when executed by one or more processors, cause the one or more processors to implement a method according to claim 11.
